(19) Europäisches Patentamt
European Patent Office
Office européen des brevets

(11) **EP 1 146 086 A1**

(12) **EUROPÄISCHE PATENTANMELDUNG**

(43) Veröffentlichungstag:
**17.10.2001 Patentblatt 2001/42**

(51) Int Cl.⁷: **C08L 83/07**

(21) Anmeldenummer: **01102753.9**

(22) Anmeldetag: **08.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.04.2000 DE 10017154**

(71) Anmelder: **Wacker-Chemie GmbH**
**81737 München (DE)**

(72) Erfinder:
- **Achenbach, Frank, Dr.**
  **84359 Simbach am Inn (DE)**
- **Wörner, Christof, Dr.**
  **84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Niedermolekulare alkenyl-terminierte Polydiorganosiloxane enthaltende additionsvernetzbare Siliconmassen**

(57) Gegenstand der Erfindung sind additionsvernetzbare Siliconmassen, die

(A) Diorganopolysiloxan mit einer bei 25°C bestimmten Viskosität von 10 Pa.s bis 40 000 Pa.s, aufgebaut aus 2
Einheiten der allgemeinen Formel (1)

$$[R_2R^1SiO_{1/2}] \qquad (1),$$

Einheiten der allgemeinen Formel (2)

$$[R_2SiO_{2/2}] \qquad (2),$$

und
0 bis 0,3 Gew.-% Einheiten der allgemeinen Formel (3)

$$[RR^1SiO_{2/2}] \qquad (3),$$

(B) Diorganopolysiloxan mit einer bei 25°C bestimmten Viskosität von 60 mPa.s bis 2 000 mPa.s, aufgebaut aus 2 Einheiten der allgemeinen Formel (1), und Einheiten der allgemeinen Formel (2) in einer Menge von 0,05 bis 25 Gew.-% bezogen auf die Summe von Diorganopolysiloxan (A) und Diorganopolysiloxan (B),
(C) SiH-funktionelles Vernetzungsmittel und
(D) Hydrosilylierungskatalysator enthalten.

Die Symbole R und $R^1$, sowie das SiH-funktionelle Vernetzungsmittel sind im Anspruch 1 charakterisiert.

EP 1 146 086 A1

**Beschreibung**

Die Erfindung betrifft additionsvernetzbare Siliconmassen und die daraus erhältlichen Siliconelastomere.

Bekanntermaßen kann durch Zusatz von niederviskosen alkenylfunktionalisierten Polydiorganosiloxanen zu hochviskosen alkenyldiorganosiloxy-terminierten Polydiorganosiloxanen die physikalischen Eigenschaften, der aus diesen Polymermischungen via Additionsvernetzung hergestellten Siliconelastomere, verbessert werden. Dies trifft insbesondere auf den Weiterreißwiderstand zu. Um die mechanischen Eigenschaften, insbesondere den Weiterreißwiderstand, zu verbessern, werden zu hochviskosen alkenyldiorganosiloxy-terminierten Polydiorganosiloxanen zum einen Polydiorganosiloxane mit end- und kettenständigen Alkenylgruppen oder niederviskose alkenyldiorganosiloxyterminierte Polydiorganosiloxane mit einer Viskosität von weniger als 50 mPas eingesetzt.

In EP-A-856561 ist eine Polyorganosiloxanzusammensetzung beschrieben, bei der ein niederviskoses Polydiorganosiloxan verwendet wird, das Vinylgruppen sowohl am Kettenende als auch in der Kette trägt und zu Siliconelastomeren mit verbesserten mechanischen Eigenschaften führt. Optional (0-30%) kann ein vinylterminiertes Polyorganosiloxan mit einer Viskosität von <20000 mPas eingesetzt werden. EP-A-695787 beschreibt, daß mit Hilfe eines niedermolekularen vinyl-terminierten Polydiorganosiloxans mit einer Viskosität von 1,0 bis <50 mPas der Weiterreißwiderstand eines Siliconelastomers verbessert werden kann. In beiden Siliconelastomeren sind die Weiterreißwiderstände aber noch verbesserungsfähig.

US-A-3,884,866 beschreibt die Verbesserung der mechanischen Eigenschaften durch Zusatz von 5-40% einer Polymermischung mit einer Viskosität von 50-5000 mPas, bestehend aus unterschiedlichen vinylhaltigen Polydiorganosiloxanen, zu einem höherviskosen vinylterminierten Polydiorganosiloxan. Die niederviskose Polymermischung enthält vinylhaltige Polydiorganosiloxane, die sowohl ketten- als auch endständige Vinylgruppen aufweisen können. Alle aufgeführten Beispiele enthalten in der niederviskosen Polymermischung eine Mischung aus beidseitig vinylterminiertem und monovinylterminiertem Polydiorganosiloxan. Der Weiterreißwiderstand ist zwar recht hoch, jedoch sind einige mechanische Eigenschaften schlecht, insbesondere der Druckverformungsrest zu hoch.

Es bestand daher die Aufgabe, additionsvernetzbare Siliconmassen bereitzustellen, aus denen durch Vernetzung Siliconelastomere mit sehr hohen Weiterreißwiderständen und gleichzeitig niederen Druckverformungsresten erhalten werden können.

Gegenstand der Erfindung sind additionsvernetzbare Siliconmassen, die

(A) Diorganopolysiloxan mit einer bei 25°C bestimmten Viskosität von 10 Pa.s bis 40 000 Pa.s, aufgebaut aus 2 Einheiten der allgemeinen Formel (1)

$$[R_2R^1SiO_{1/2}] \tag{1},$$

Einheiten der allgemeinen Formel (2)

$$[R_2SiO_{2/2}] \tag{2},$$

und 0 bis 0,3 Gew.-% Einheiten der allgemeinen Formel (3)

$$[RR^1SiO_{2/2}] \tag{3},$$

wobei in den allgemeinen Formeln (1) bis (3)

R   gleiche oder verschiedene einwertige, gegebenenfalls halogen- oder cyanosubstituierte, über SiC-gebundene $C_1$-$C_{18}$-Kohlenwasserstoffreste, die frei sind von aliphatischen Kohlenstoff-Kohlenstoff Mehrfachbindungen und

$R^1$   gleiche oder verschiedene einwertige, gegebenenfalls halogen- oder cyanosubstituierte, gegebenenfalls über eine organische zweiwertige Gruppe an Silicium gebundene $C_1$-$C_{10}$- Alkenylgruppen bedeuten,

(B) Diorganopolysiloxan mit einer bei 25°C bestimmten Viskosität von 60 mPa.s bis 2 000 mPa.s, aufgebaut aus 2 Einheiten der allgemeinen Formel (1), und Einheiten der allgemeinen Formel (2) in einer Menge von 0,05 bis 25 Gew.-% bezogen auf die Summe von Diorganopolysiloxan (A) und Diorganopolysiloxan (B),

(C) SiH-funktionelles Vernetzungsmittel, dessen Zusammensetzung der durchschnittlichen allgemeinen Formel (4)

$$H_a R^2_b SiO_{(4-a-b)/2} \tag{4},$$

entspricht, in der

**$R^2$**   die Bedeutungen von **R** aufweist und
**a** und **b**   nichtnegative ganze Zahlen sind,

mit der Maßgabe, daß 0.5<**(a+b)**<3,0 und 0<**a**<2, und daß mindestens zwei siliciumgebundene Wasserstoffatome pro Molekül vorhanden sind und
(D) Hydrosilylierungskatalysator enthalten.

Beispiele für unsubstituierte Kohlenwasserstoffeste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.
Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.
Bei dem Kohlenwasserstoffrest **R** handelt es sich bevorzugt um unsubstituierte und substituierte $C_1$- bis $C_6$-Alkylreste und den Phenylrest, insbesondere um den Methyl- und Phenylrest.
Die Alkenylgruppen **$R^1$** sind einer Anlagerungsreaktion mit dem SiH-funktionellen Vernetzungsmittel (B) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.
Organische zweiwertige Gruppen, über die die Alkenylgruppen **$R^1$** an Silicium der Polymerkette gebunden sein können, bestehen beispielsweise aus Oxyalkyleneinheiten, wie solche der allgemeinen Formel (5)

$$-(O)_m[(CH_2)_nO]_o- \tag{5},$$

in der

**m**   die Werte 0 oder 1, insbesondere 0,
**n**   Werte von 1 bis 4, insbesondere 1 oder 2 und
**o**   Werte von 1 bis 20, insbesondere von 1 bis 5 bedeuten.

Die Oxyalkyleneinheiten der allgemeinen Formel (5) sind links an ein Siliciumatom gebunden.
Vorzugsweise weist das Diorganopolysiloxan (A) eine bei 25°C bestimmte Viskosität von 15 Pa.s bis 35 000 Pa.s auf.
Vorzugsweise weist das Diorganopolysiloxan (A) 0 bis 0,1 Gew.-%, insbesondere keine Einheiten der allgemeinen Formel (3) auf.
Das Diorganopolysiloxan (B) weist vorzugsweise eine bei 25°C bestimmte Viskosität von 60 mPa.s bis 500 mPa.s, insbesondere bis 300 mPa.s auf.
Vorzugsweise ist Diorganopolysiloxan (B) in einer Menge von mindestens 0,1 bis höchstens 15, insbesondere höchstens 10 Gew.-% bezogen auf die Summe von Diorganopolysiloxan (A) und Diorganopolysiloxan (B) vorhanden.
Bevorzugt ist die Verwendung eines drei oder mehr SiH-Bindungen pro Molekül enthaltenden Vernetzungsmittels (C). Bei Verwendung eines nur zwei SiH-Bindungen pro Molekül aufweisenden Vernetzungsmittels empfiehlt sich die Verwendung eines Diorganopolysiloxans (A), das über mindestens drei Alkenylgruppen pro Molekül verfügt.
Der Wasserstoffgehalt des Vernetzungsmittels (C), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.
Das Vernetzungsmittels (C) enthält vorzugsweise mindestens drei und höchstens 600 Siliciumatome pro Molekül. Bevorzugt ist die Verwendung von Vernetzungsmittel (C), das 4 bis 200 Siliciumatome pro Molekül enthält.

Die Struktur des Vernetzungsmittels (C) kann linear, verzweigt, cyclisch oder netzwerkartig sein.

Besonders bevorzugte Vernetzungsmittel (C) sind lineare Polyorganosiloxane der allgemeinen Formel (6)

$$(HR^3_2SiO_{1/2})_c(R^3_3SiO_{1/2})_d(HR^3SiO_{2/2})_e(R^3_2SiO_{2/2})_f \tag{6},$$

wobei

$R^3$ die Bedeutungen von $R$ haben und

die nichtnegativen ganzen Zahlen **c, d, e** und **f** folgende Relationen erfüllen: (**c+d**)=2, (**c+e**)>2, 5<(**e+f**)<200 und 1<**e**/(**e +f**)<0,1.

Das SiH-funktionelle Vernetzungsmittel (C) ist vorzugsweise in einer solchen Menge in der vernetzbaren Siliconkautschukmasse enthalten, daß das Molverhältnis von SiH-Gruppen zu Alkenylgruppen bei 0,5 bis 5, insbesondere bei 1,0 bis 3,0 liegt.

Als Hydrosilylierungskatalysator (D) können alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren (D) können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2.Olefin)_2$ und $H(PtCl_3.Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Hydrosilylierungskatalysator (D) kann in jeder beliebigen Form eingesetzt werden, beispielsweise auch in Form von Hydrosilylierungskatalysator enthaltenden Mikrokapseln oder Organopolysiloxanpartikeln.

Der Gehalt an Hydrosilylierungskatalysatoren (D) wird so gewählt, daß die additionsvernetzbare Siliconmasse einen Pt-Gehalt von 0,1-100 ppm, bevorzugt von 0,5-40 ppm besitzt.

Die mechanische Festigkeit des vulkanisierten Siliconkautschuks ist erhöht, wenn die additionsvernetzbaren Siliconmassen aktiv verstärkende Füllstoffe als Bestandteil (E) enthalten. Als aktiv verstärkende Füllstoffe (E) werden vor allem gefällte und pyrogene Kieselsäuren, sowie Gemische derselben verwendet. Die spezifische Oberfläche dieser aktiv verstärkenden Füllstoffe sollte mindestens 50 m$^2$/g betragen oder vorzugsweise im Bereich von 100 bis 400 m$^2$/g gemäß der Bestimmung nach der BET-Methode liegen. Derartige aktiv verstärkende Füllstoffe sind auf dem Gebiet der Siliconkautschuke sehr gut bekannte Materialien.

Der Gehalt der additionsvernetzbaren Siliconmassen an aktiv verstärkendem Füllstoff (E) liegt vorzugsweise im Bereich von 5 bis 60 Gew.-%, insbesondere bei 10 bis 40 Gew.-%.

Die additionsvernetzbaren Siliconmassen können wahlweise als Bestandteile (F) weitere Zusätze zu einem Anteil von bis zu 70 Gew.-%, vorzugsweise von 0,01 bis 40 Gew.-%, enthalten. Diese Zusätze können z.B. nichtverstärkende Füllstoffe, Dispergierhilfsmittel, Haftvermittler, Inhibitoren, Pigmente, Farbstoffe, Weichmacher, Katalysatoren, Silicone, Hitzestabilisatoren usw. sein.

Die Compoundierung der additionsvernetzbaren Siliconmassen erfolgt durch Mischen der oben aufgeführten Komponenten in beliebiger Reihenfolge. Die Vernetzung der additionsvernetzbaren Siliconmassen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind auch die Siliconelastomere, die durch Vernetzen der additionsvernetzbaren Siliconmassen erhältlich sind.

In den nachfolgenden Beispielen sind, falls jeweils nicht anders angegeben,

a) alle Drücke 0,10 MPa (abs.);
b) alle Temperaturen 20° C .

Beispiele:

**Beispiel 1**

Herstellung der Grundmasse:

In einem Laborkneter wurden 200 Masseteile eines vinyldimethylsiloxy-terminierten Polydimethylsiloxans mit einer Viskosität von 20000 mPa*s (25°C) vorgelegt, auf 150°C aufgeheizt und mit 164 Masseteilen einer hydrophoben pyrogenen Kieselsäure mit einer spezifischen Oberfläche nach BET von 300 m$^2$/g und einem Kohlenstoffgehalt von 3,9 Gew.-% versetzt. Es entstand eine hochviskose Masse, die anschließend mit 211 Masseteilen des obengenannten Polydimethylsiloxans und 11,7 Masseteilen eines vinyldimethylsiloxy-terminierten Polydimethylsiloxans mit einer Viskosität von 100 mPa*s (25°C) verdünnt wurde. Durch Kneten unter Vakuum (10 mbar) bei 150°C wurden innerhalb einer Stunde flüchtige Bestandteile entfernt.

550 g dieser Grundmasse wurden auf einer Walze bei einer Temperatur von 25°C mit 0,40 g Ethinylcyclohexanol, 12,7 g eines Mischpolymerisats aus Dimethylsiloxy-, Methylhydrogensiloxy- und Trimethylsiloxy-Einheiten mit einer Viskosität von 300 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Der Pt-Gehalt der Siliconmasse betrug 9 ppm.

Die auf diese Weise hergestellten Siliconmassen wurden anschließend in einer hydraulischen Presse bei einer Temperatur von 170°C innerhalb von 10 Minuten vernetzt. Die entformten, ca. 2 bzw. 6 mm dicken Siliconelastomerfolien wurden 6 Stunden bei 200°C in einem Umluftofen getempert.

**Beispiel 2**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 150 mPa*s (25°C) eingesetzt. Die übrige Zusammensetzung der Siliconmasse sowie die Weiterverarbeitung bleiben unverändert.

**Beispiel 3**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 200 mPa*s (25°C) eingesetzt. Die übrige Zusammensetzung der Siliconmasse sowie die Weiterverarbeitung bleiben unverändert.

**Beispiel 4**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 84 mPa*s (25°C) eingesetzt. Die übrige Zusammensetzung der Siliconmasse sowie die Weiterverarbeitung bleiben unverändert.

**Beispiel 5**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 61 mPa*s (25°C) eingesetzt. Die übrige Zusammensetzung der Siliconmasse sowie die Weiterverarbeitung bleiben unverändert.

**Beispiel 6 (nicht erfindungsgemäß)**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 39 mPa*s (25°C) eingesetzt. Die übrige Zusammensetzung der Siliconmasse sowie die Weiterverarbeitung bleiben unverändert.

**Beispiel 7 (nicht erfindungsgemäß)**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 23 mPa*s (25°C) eingesetzt. Die übrige Zusammensetzung der Siliconmasse sowie die Weiterverarbeitung bleiben unverändert.

**Beispiel 8 (nicht erfindungsgemäß)**

Wie in Beispiel 1 beschrieben, jedoch wird anstelle des in Beispiel 1 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Viskosität von 20000 mPa*s (25°C) eingesetzt. Die übrige Zusammensetzung der Siliconmasse sowie die Weiterverarbeitung bleiben unverändert.

Tabelle 1:

| Einfluss der Viskosität des hinzugefügten niedermolekularen vinyldimethylsiloxy-terminierten Polydimethylsiloxans auf die mechanischen Eigenschaften von LSR-Elastomeren. Die Werte der getemperten Siliconelastomere sind in Klammern angegeben. | | | | | | |
|---|---|---|---|---|---|---|
| | Viskosität des niedermolekularen vinyldimethylsiloxyterminierten Polydimethylsiloxans | Härte | Weiterwiderstand (ASTM D624) | Druckverformungs -rest | Reißfestigkeit | Reißdehnung |
| | [mPas] | [Shore A] | [N/mm] | [%] | [N/mm$^2$] | [%] |
| Beispiel 8 (Vergleich) | ohne | 43 (44) | 22 (26) | 62 (10) | 8,9 (8,7) | 584 (524) |
| Beispiel 7 | 23 | 46 (46) | 27 (32) | 66 (10) | 7,8 (8,0) | 536 (465) |
| Beispiel 6 | 39 | 47 (47) | 34 (32) | 66 (9) | 8,6 (7,6) | 549 (429) |
| Beispiel 5 | 61 | 46 (46) | 36 (36) | 63 (8) | 8,5 (8,1) | 547 (474) |
| Beispiel 4 | 84 | 47 (46) | 36 (37) | 59 (8) | 8,2 (8,1) | 532 (468) |
| Beispiel 1 | 100 | 47 (46) | 45 (39) | 63 (8) | 8,8 (8,2) | 530 (444) |
| Beispiel 2 | 150 | 45 (45) | 44 (35) | 63 (9) | 8,4 (8,1) | 536 (472) |
| Beispiel 3 | 200 | 45 (46) | 40 (36) | 71 (10) | 8,8 (8,2) | 568 (456) |

Aus Tabelle 1 ist ersichtlich, dass durch Einsatz von niedermolekularem vinyldimethylsiloxy-terminiertem Polydimethylsiloxan mit einer Viskosität von 60-200 mPas (25°C) die höchsten Weiterreißwiederstände nach ASTM D624 erhalten werden.

**Beispiel 9**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 0,1 Gew.-% an vinyldimethylsiloxy-terminiertem Polydimethylsiloxan mit einer Viskosität von 100 mPa*s (25°C) eingesetzt. Die übrige Zusammensetzung der Siliconmasse sowie die Weiterverarbeitung bleiben unverändert.

**Beispiel 10**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 0,5 Gew.-% an vinyldimethylsiloxy-terminiertem Polydimethylsiloxan mit einer Viskosität von 100 mPa*s (25°C) eingesetzt. Die übrige Zusammensetzung der Siliconmasse sowie die Weiterverarbeitung bleiben unverändert.

**Beispiel 11**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 1,0 Gew.-% an vinyldimethylsiloxy-terminiertem Polydimethylsiloxan mit einer Viskosität von 100 mPa*s (25°C) eingesetzt. Die übrige Zusammensetzung der Siliconmasse sowie die Weiterverarbeitung bleiben unverändert.

**Beispiel 12**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 5,0 Gew.-% an vinyldimethylsiloxy-terminiertem Polydimethylsiloxan mit einer Viskosität von 100 mPa*s (25°C) eingesetzt. Die übrige Zusammensetzung der Siliconmasse sowie die Weiterverarbeitung bleiben unverändert.

**Beispiel 13**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 10,0 Gew.-% an vinyldimethylsiloxy-terminiertem Polydimethylsiloxan mit einer Viskosität von 100 mPa*s (25°C) eingesetzt. Die übrige Zusammensetzung der Siliconmasse sowie die Weiterverarbeitung bleiben unverändert.

Tabelle 2:

| | Massenanteil an niedermolekularem vinyldimethylsiloxyterminiertem Polydimethylsiloxan (100 mPas bei 25°C) in der Grundmasse | Härte | Weiterreißwiderstand (ASTM D624) | Druckverformungsrest | Reißfestigkeit | Reißdehnung |
|---|---|---|---|---|---|---|
| Einfluss des Anteils an vinyldimethylsiloxy-terminiertem Polydimethylsiloxan mit einer Viskosität von 100 mPas auf die mechanischen Eigenschaften von LSR-Elastomeren. Die Werte der getemperten Siliconelastomere sind in Klammern angegeben. | | | | | | |
| | [Gew.-%] | [Shore A] | [N/mm] | [%] | [N/mm$^2$] | [%] |
| Beispiel 9 | 0,1 | 45 (46) | 25 (28) | 60 (10) | 8,6 (8,3) | 580 (480) |
| Beispiel 10 | 0,5 | 45 (45) | 33 (38) | 59 (11) | 8,1 (8,3) | 549 (474) |
| Beispiel 11 | 1,0 | 46 (46) | 34 (36) | 60 (12) | 8,7 (8,6) | 585 (465) |
| Beispiel 1 | 2,0 | 47 (46) | 45 (39) | 58 (9) | 8,8 (8,4) | 567 (454) |
| Beispiel 12 | 5,0 | 47 (48) | 42 (35) | 60 (12) | 8,3 (8,8) | 542 (442) |
| Beispiel 13 | 10,0 | 44 (50) | 39 (36) | 62 (12) | 7,3 (7,6) | 506 (354) |

Aus Tabelle 2 ist ersichtlich, dass durch Einsatz von 2 Gew.-% an niedermolekularem vinyldimethylsiloxy-terminiertem Polydimethylsiloxan mit einer Viskosität von 100 mPas (25°C) die höchsten Weiterreißwiederstände erhalten werden.

**Beispiel 14**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 2,0 Gew.-% an vinyldimethylsiloxy-terminiertem Polydimethylsiloxan mit einer Viskosität von 310 mPa*s (25°C) eingesetzt. Die übrige Zusammensetzung der Siliconmasse sowie die Weiterverarbeitung bleiben unverändert.

**Beispiel 15 (nicht erfindungsgemäß)**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 1,3 Gew.-% an vinyldimethylsiloxy-terminiertem Polydimethylsiloxan mit einer Viskosität von 310 mPa*s (25°C) und 0,7 Gew.-% an monovinyldimethylsiloxy-monotrimethylsiloxy-terminiertem Polydimethylsiloxan mit einer Viskosität von 320 mPa*s (25°C) eingesetzt. Die übrige Zusammensetzung der Siliconmasse sowie die Weiterverarbeitung bleiben unverändert.

**Beispiel 16 (nicht erfindungsgemäß)**

Wie in Beispiel 1 beschrieben, jedoch werden anstelle des in Beispiel 1 verwendeten Massenanteils von 2,0 Gew.-% an vinyldimethylsiloxy-terminiertem Polydimethylsiloxan mit einer Viskosität von 100 mPa*s (25°C) in der Grundmasse 1,0 Gew.-% an vinyldimethylsiloxy-terminiertem Polydimethylsiloxan mit einer Viskosität von 310 mPa*s (25°C) und 1,0 Gew.-% an monovinyldimethylsiloxy-monotrimethylsiloxy-terminiertem Polydimethylsiloxan mit einer Viskosität von 320 mPa*s (25°C) eingesetzt. Die übrige Zusammensetzung der Siliconmasse sowie die Weiterverarbeitung bleiben unverändert.

Tabelle 3:

| | Massenanteil an niedermolekularem Polydimethylsiloxan in der Grundmasse [Gew.-%] | | Härte | Weiterreißwiderstand (ASTM | Druckverformungsrest | Reißfestigkeit | Reißdehnung |
|---|---|---|---|---|---|---|---|
| | beidseitig vinyldimethylsiloxyterminiert (310 mPas bei 25°C) | monovinyldimethylsiloxy, monotrimethylsiloxyterminiert (310 mPas bei 25°C) | [Shore A] | D624) [N/mm] | [%] | [N/mm$^2$] | [%] |
| Beispiel 14 | 2,0 | - | 45 (45) | 39 (36) | 67 (10) | 8,9 (8,7) | 550 (498) |
| Beispiel 15 | 1,3 | 0,7 | 45 (45) | 36 (35) | 70 (13) | 8,8 (8,8) | 555 (480) |
| Beispiel 16 | 1,0 | 1,0 | 45 (45) | 37 (35) | 73 (16) | 8,6 (8,5) | 556 (510) |

Einfluss der Endgruppe (Vinyldimethylsiloxy- bzw. Trimethylsiloxy-) des niedermolekularen Polydimethylsiloxans auf die mechanischen Eigenschaften von LSR-Elastomeren. Die Werte der getemperten Siliconelastomere sind in Klammern angegeben.

Aus Tabelle 3 ist ersichtlich, dass durch teilweisen Ersatz der Vinyldimethylsiloxy- durch Trimethylsiloxy-Endgruppe des niedermolekularen Polydimethylsiloxans der Druckverformungsrest der aus den Grundmassen hergestellten Siliconelastomere erhöht wird.

**Beispiel 17**

411 Masseteile eines vinyldimethylsiloxy-terminierten Polydimethylsiloxans, das bei 25°C eine Brabender-Plastizität von 630 mkp aufwies, wurden mit 164 Masseteilen einer hydrophoben pyrogenen Kieselsäure mit einer Oberfläche nach BET von 300 m$^2$/g und einem Kohlenstoffgehalt von 3,9 Gew.-%, die in Portionen zudosiert wurde, während einer Stunde in einem Doppel-Z-Kneter bei 70°C zu einer homogenen Grundmasse vermischt. Diese Masse wurde 3 Stunden bei 150°C im Ölpumpenvakuum geknetet und ausgeheizt. Anschließend wurde mit 11,7 Masseteilen eines vinyldimethylsiloxy-terminierten Polydimethylsiloxans mit einer Viskosität von 100 mPa*s (25°C) verdünnt.
550 g dieser Grundmasse wurden auf einer Walze bei einer Temperatur von 25°C mit 0,66 g Ethinylcyclohexanol, 11,0 g eines Mischpolymerisats aus Dimethylsiloxy-, Methylhydrogensiloxy- und Trimethylsiloxy-Einheiten mit einer Viskosität von 300 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Der Pt-Gehalt der Siliconmasse betrug 9 ppm.
Die auf diese Weise hergestellten Siliconmassen wurden anschließend in einer hydraulischen Presse bei einer Temperatur von 170°C innerhalb von 10 Minuten vernetzt. Die entformten, ca. 2 bzw. 6 mm dicken Siliconelastomerfolien wurden 6 Stunden bei 200°C in einem Umluftofen getempert.

**Beispiel 18 (nicht erfindungsgemäß)**

Wie in Beispiel 17 beschrieben, jedoch wird anstelle des in Beispiel 17 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Brabender-Plastizität von 630 mkp (25°C) eingesetzt. Die übrige Zusammensetzung der Siliconmasse sowie die Weiterverarbeitung bleiben unverändert.

Tabelle 4:

| Einfluss des niedermolekularen vinyldimethylsiloxy-terminierten Polydimethylsiloxans mit einer Viskosität von 100 mPas (25°C) auf die mechanischen Eigenschaften von HTV-Elastomeren. Die Werte der getemperten Siliconelastomere sind in Klammern angegeben. | | | | | | |
|---|---|---|---|---|---|---|
| | Massenanteil an niedermolekularem vinyldimethylsiloxyterminiertem Polydimethylsiloxan (100 mPas bei 25°C) in der Grundmasse | Härte | Weiterreißwiderstand (DIN 53507) | Druckvermungsrest | Reißfestigkeit | Reißdehnung |
| | [Gew.-%] | [Shore A] | [N/mm] | [%] | [N/mm$^2$] | [%] |
| Beispiel 18 (Vergleich) | - | 35 (38) | 12,0 (12,9) | 58 (16) | 11,5 (11,8) | 1173 (1064) |
| Beispiel 17 | 2,0 | 38 (40) | 13,7 (13,4) | 55 (15) | 12,9 (11,7) | 1184 (1066) |

Aus Tabelle 4 ist ersichtlich, dass durch Zusatz von niedermolekularem vinyldimethylsiloxy-terminiertem Polydimethylsiloxan mit einer Viskosität von 100 mPas (25°C) der Weiterreißwiederstand nach DIN 53507 erhöht wird.

**Beispiel 19**

411 Masseteile eines vinyldimethylsiloxy-terminierten Polydimethylsiloxans, das bei 25°C eine Brabender-Plastizität von 630 mkp und 3 Vinylmethylsiloxy-Gruppen pro Kette aufwies, wurden mit 164 Masseteilen einer hydrophoben pyrogenen Kieselsäure mit einer Oberfläche nach BET von 300 $m^2$/g und einem Kohlenstoffgehalt von 3,9 Gew.-%, die in Portionen zudosiert wurde, während einer Stunde in einem Doppel-Z-Kneter bei 70°C zu einer homogenen Grundmasse vermischt. Diese Masse wurde 3 Stunden bei 150°C im Ölpumpenvakuum geknetet und ausgeheizt. Anschließend wurde mit 11,7 Masseteilen eines vinyldimethylsiloxy-terminierten Polydimethylsiloxans mit einer Viskosität von 100 mPa*s (25°C) verdünnt.

550 g dieser Grundmasse wurden auf einer Walze bei einer Temperatur von 25°C mit 0,66 g Ethinylcyclohexanol, 11,0 g eines Mischpolymerisats aus Dimethylsiloxy-, Methylhydrogensiloxy- und Trimethylsiloxy-Einheiten mit einer Viskosität von 300 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Der Pt-Gehalt der Siliconmasse betrug 9 ppm.

Die auf diese Weise hergestellten Siliconmassen wurden anschließend in einer hydraulischen Presse bei einer Temperatur von 170°C innerhalb von 10 Minuten vernetzt. Die entformten, ca. 2 bzw. 6 mm dicken Siliconelastomerfolien wurden 6 Stunden bei 200°C in einem Umluftofen getempert.

**Beispiel 20 (nicht erfindungsgemäß)**

Wie in Beispiel 19 beschrieben, jedoch wird anstelle des in Beispiel 19 verwendeten vinyldimethylsiloxy-terminierten Polydimethylsiloxans mit einer Viskosität von 100 mPa*s (25°C) ein vinyldimethylsiloxy-terminiertes Polydimethylsiloxan mit einer Brabender-Plastizität von 630 mkp (25°C) und 3 Vinylmethylsiloxy-Gruppen/Kette eingesetzt. Die übrige Zusammensetzung der Siliconmasse sowie die Weiterverarbeitung bleiben unverändert.

Tabelle 5:

| | Massenanteil an niedermolekularem vinyldimethylsiloxyterminiertem Polydimethylsiloxan (100 mPas bei 25°C) in der Grundmasse | Härte | Weiterreißwiderstand DIN 53507 | Druckverformungsrest | Reißfestigkeit | Reißdehnung |
|---|---|---|---|---|---|---|
| Einfluss des niedermolekularen vinyldimethylsiloxy-terminierten Polydimethylsiloxans mit einer Viskosität von 100 mPas (25°C) auf die mechanischen Eigenschaften von HTV-Elastomeren. Die Werte der getemperten Siliconelastomere sind in Klammern angegeben. ||||||| 
| | [Gew.-%] | [Shore A] | [N/mm] | [%] | [N/mm$^2$] | [%] |
| Beispiel 20 (Vergleich) | - | 39 (43) | 14,2 (14,9) | 65 (19) | 11,3 (10,8) | 1090 (872) |
| Beispiel 19 | 2,0 | 42 (45) | 17,3 (18,4) | 63 (20) | 11,6 (11,3) | 1074 (930) |

Aus Tabelle 5 ist ersichtlich, dass auch bei Vinylmethylsiloxyhaltigen vinyldimethylsiloxy-terminierten HTV-Polymeren durch Zusatz von niedermolekularem vinyldimethylsiloxy-terminiertem Polydimethylsiloxan mit einer Viskosität von 100 mPas (25°C) der Weiterreißwiederstand nach DIN 53507 erhöht wird.

Die Charakterisierung der Siliconelastomereigenschaften in den Beispielen 1-20 erfolgten gemäß DIN 53505 (Shore A), DIN 53504-S1 (Reißfestigkeit und Reißdehnung), ASTM D 624 B bzw. DIN 53507 (Weiterreißwiderstand) und DIN 53517 (Druckverformungsrest).

**Patentansprüche**

1.    Additionsvernetzbare Siliconmassen, die

(A) Diorganopolysiloxan mit einer bei 25°C bestimmten Viskosität von 10 Pa.s bis 40 000 Pa.s, aufgebaut aus 2 Einheiten der allgemeinen Formel (1)

$$[R_2R^1SiO_{1/2}] \qquad (1),$$

Einheiten der allgemeinen Formel (2)

$$[R_2SiO_{2/2}] \qquad (2),$$

und
0 bis 0,3 Gew.-% Einheiten der allgemeinen Formel (3)

$$[RR^1SiO_{2/2}] \qquad (3),$$

wobei in den allgemeinen Formeln (1) bis (3)

**R**    gleiche oder verschiedene einwertige, gegebenenfalls halogen- oder cyanosubstituierte, über SiC-gebundene $C_1$-$C_{18}$-Kohlenwasserstoffreste, die frei sind von aliphatischen Kohlenstoff-Kohlenstoff Mehrfachbindungen und

**R$^1$**    gleiche oder verschiedene einwertige, gegebenenfalls halogen- oder cyanosubstituierte, gegebenenfalls über eine organische zweiwertige Gruppe an Silicium gebundene $C_1$-$C_{10}$- Alkenylgruppen bedeuten,

(B) Diorganopolysiloxan mit einer bei 25°C bestimmten Viskosität von 60 mPa.s bis 2 000 mPa.s, aufgebaut aus 2 Einheiten der allgemeinen Formel (1), und Einheiten der allgemeinen Formel (2) in einer Menge von 0,05 bis 25 Gew.-% bezogen auf die Summe von Diorganopolysiloxan (A) und Diorganopolysiloxan (B),
(C) SiH-funktionelles Vernetzungsmittel, dessen Zusammensetzung der durchschnittlichen allgemeinen Formel (4)

$$H_aR^2_bSiO_{(4-a-b)/2} \qquad (4),$$

entspricht, in der

**R$^2$**    die Bedeutungen von **R** aufweist und
**a** und **b**    nichtnegative ganze Zahlen sind,
mit der Maßgabe, daß 0.5<**(a+b)**<3,0 und 0<**a**<2, und daß mindestens zwei siliciumgebundene Wasserstoffatome pro Molekül vorhanden sind und

(D) Hydrosilylierungskatalysator enthalten.

2.    Additionsvernetzbare Siliconmassen nach Anspruch 1, bei denen die bei 25°C bestimmte Viskosität des Bestandteils (A) 15 Pa.s bis 35 000 Pa.s aufweist.

3. Additionsvernetzbare Siliconmassen nach Anspruch 1 oder 2, bei denen das Diorganopolysiloxan (A) 0 bis 0,1 Gew.-% Einheiten der allgemeinen Formel (3) aufweist.

4. Additionsvernetzbare Siliconmassen nach Anspruch 1 bis 3, bei denen das Diorganopolysiloxan (B) eine bei 25°C bestimmte Viskosität von 60 mPa.s bis 500 mPa.s aufweist.

5. Additionsvernetzbare Siliconmassen nach Anspruch 1 bis 4, bei denen das Diorganopolysiloxan (B) in einer Menge von 0,1 bis 15 Gew.-% bezogen auf die Summe von Diorganopolysiloxan (A) und Diorganopolysiloxan (B) vorhanden ist.

6. Siliconelastomere, erhältlich durch Vernetzen der additionsvernetzbaren Siliconmassen gemäß Anspruch 1 bis 5.

Europäisches Patentamt

# EUROPÄISCHER RECHERCHENBERICHT

Nummer der Anmeldung

EP 01 10 2753

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 785 236 A (DOW CORNING) 23. Juli 1997 (1997-07-23) * Ansprüche 1-4 * * Seite 2, Zeile 3 - Zeile 6 * * Seite 2, Zeile 21 - Zeile 26 * * Seite 3, Zeile 8 - Zeile 24 * * Seite 4, Zeile 12 - Zeile 13 * * Seite 4, Zeile 42 - Zeile 43 * * Seite 4, Zeile 49 - Zeile 50 * | 1-6 | C08L83/07 |
| D,X | US 3 884 866 A (STRIKER RICHARD A ET AL) 20. Mai 1975 (1975-05-20) * Ansprüche 1-7 * * Spalte 2, Zeile 40 - Zeile 58 * * Spalte 4, Zeile 22 - Spalte 5, Zeile 16 * * Spalte 9 - Spalte 11; Beispiel 1 * | 1-6 | |
| D,X | EP 0 856 561 A (DOW CORNING) 5. August 1998 (1998-08-05) * Ansprüche 1,11 * | 1 | |
| X | US 6 002 039 A (O'BRIEN MICHAEL J ET AL) 14. Dezember 1999 (1999-12-14) * Anspruch 1 * * Spalte 3, Zeile 15 - Zeile 60 * * Spalte 5, Zeile 7 - Zeile 53 * | 1 | RECHERCHIERTE SACHGEBIETE (Int.Cl.7) C08L |
| X | US 5 661 210 A (BURNS GARY THOMAS ET AL) 26. August 1997 (1997-08-26) * Ansprüche 1,11,13 * | 1 | |
| D,A | EP 0 695 787 A (DOW CORNING) 7. Februar 1996 (1996-02-07) * Ansprüche 1,2 * * Seite 2, Zeile 3 - Zeile 31 * | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 19. Juli 2001 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

EP 1 146 086 A1

**Europäisches Patentamt**

## EUROPÄISCHER RECHERCHENBERICHT

Nummer der Anmeldung

EP 01 10 2753

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 415 180 A (GEN ELECTRIC) 6. März 1991 (1991-03-06) * Anspruch 1 * * Seite 3, Zeile 35 – Seite 4, Zeile 21 * --- | 1 | |
| A | EP 0 826 733 A (DOW CORNING) 4. März 1998 (1998-03-04) * Anspruch 1 * ----- | 1 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 19. Juli 2001 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie,übereinstimmendes Dokument

EPO FORM 1503 03.82 (P04C03)

19

## ANHANG ZUM EUROPÄISCHEN RECHERCHENBERICHT
## ÜBER DIE EUROPÄISCHE PATENTANMELDUNG NR.

EP 01 10 2753

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0785236 | A | 23-07-1997 | US | 5574073 A | 12-11-1996 |
| | | | JP | 10001612 A | 06-01-1998 |
| US 3884866 | A | 20-05-1975 | DE | 2415554 A | 31-10-1974 |
| | | | FR | 2225480 A | 08-11-1974 |
| | | | GB | 1418601 A | 24-12-1975 |
| | | | JP | 50040661 A | 14-04-1975 |
| | | | JP | 57014389 B | 24-03-1982 |
| | | | US | 3957713 A | 18-05-1976 |
| EP 0856561 | A | 05-08-1998 | US | 5861448 A | 19-01-1999 |
| | | | CN | 1192456 A | 09-09-1998 |
| | | | DE | 69800172 D | 20-07-2000 |
| | | | DE | 69800172 T | 15-02-2001 |
| | | | JP | 10219115 A | 18-08-1998 |
| US 6002039 | A | 14-12-1999 | US | 5506289 A | 09-04-1996 |
| | | | US | 5922795 A | 13-07-1999 |
| | | | US | 5928564 A | 27-07-1999 |
| | | | US | 6015853 A | 18-01-2000 |
| | | | US | 5948339 A | 07-09-1999 |
| | | | US | 6034199 A | 07-03-2000 |
| | | | DE | 4425232 A | 26-01-1995 |
| | | | FR | 2707993 A | 27-01-1995 |
| | | | GB | 2280433 A,B | 01-02-1995 |
| | | | JP | 7178757 A | 18-07-1995 |
| US 5661210 | A | 26-08-1997 | EP | 0832934 A | 01-04-1998 |
| | | | JP | 10120906 A | 12-05-1998 |
| EP 0695787 | A | 07-02-1996 | DE | 69518287 D | 14-09-2000 |
| | | | DE | 69518287 T | 18-01-2001 |
| | | | JP | 8059995 A | 05-03-1996 |
| EP 0415180 | A | 06-03-1991 | US | 5082886 A | 21-01-1992 |
| | | | CA | 2021077 A | 01-03-1991 |
| | | | DE | 69032798 D | 14-01-1999 |
| | | | DE | 69032798 T | 02-09-1999 |
| | | | JP | 2680174 B | 19-11-1997 |
| | | | JP | 3149260 A | 25-06-1991 |
| | | | KR | 191366 B | 15-06-1999 |
| EP 0826733 | A | 04-03-1998 | US | 5859094 A | 12-01-1999 |
| | | | JP | 10087997 A | 07-04-1998 |

EPO FORM P0461

Für nähere Einzelheiten zu diesem Anhang : siehe Amtsblatt des Europäischen Patentamts, Nr.12/82